# EUROPÄISCHE PATENTSCHRIFT

(11) **EP 1 077 104 B1**
(45) Veröffentlichungstag und Bekanntmachung des Hinweises auf die Patenterteilung: **23.02.2005**
(21) Anmeldenummer: 00116912.7
(22) Anmeldetag: 05.08.2000
(51) Int. Cl.: B23P 6/00, B23P 19/04, B65D 8/20, B21D 51/26

(54) **Verfahren zum Rekonditionieren von Mehrwegfässern aus Metallblech**
Method of reconditioning a reusable barrel made of metal sheet
Procédé de reconditionnement pour tonneau réutilisable en tôle metallique

(30) Priorität: 14.08.1999 DE 19938597
(43) Veröffentlichungstag der Anmeldung: 21.02.2001
(73) Patentinhaber: Schütz GmbH & Co. KGaA, 56242 Selters (DE)
(72) Erfinder: Schütz, Udo, 56242 Selters /Ww. (DE)
(74) Vertreter: Pürckhauer, Rolf, Dipl.-Ing.

(56) Entgegenhaltungen:
- DE-A- 4 126 784
- DE-A- 19 641 172
- US-A- 3 745 650
- PATENT ABSTRACTS OF JAPAN vol. 009, no. 176 (M-398), 20. Juli 1985 (1985-07-20) & JP 60 046834 A (SHIGEO MARUYAMA), 13. März 1985 (1985-03-13)

## Beschreibung

Die Erfindung betrifft ein Verfahren zum Rekonditionieren von Mehrwegfässern aus Metallblech, die für den anfänglichen Gebrauch als Spundfässer ausgebildet sind, die einen mit dem Faßmantel fest verbundenen Oberboden mit einem Füll- und Entleerspund aufweisen und die für den weiteren Gebrauch durch Abtrennen des Oberbodens zu Deckelfässern mit Spunddeckel oder einfachem Deckel mit Spannringverschluß zur Befestigung des Deckels auf dem nach außen gerollten Öffnungsrand des Faßmantels umrüstbar sind, wobei der den Faßhals bildende obere Abschnitt des Faßmantels zum Öffnungsrand des Faßmantels eingezogen ist oder sich zu diesem verjüngt und bei der Ausbildung als Spundfässer der Oberboden mit seinem gerollten Außenrand auf dem Öffnungsrand des Faßmantels aufliegt und mit diesem zusammengefalzt und verschweißt ist.

Die strengen gesetzlichen Umweltschutzvorschriften erfordern den Übergang von Einweg- auf Mehrweggebinde wie beispielsweise Fässer aus Stahl oder Kunststoff, die Umstellung auf Gebinde mit größerem Volumen mit dem Ziel einer Verringerung der Restmengen und die Entwicklung neuer Mehrweggebinde, die im Hinblick auf die Entlastung der Umwelt von schädlichen Stoffen rekonditioniert und für die Rekonditionierung sowie für eine ordnungsgemäße Entsorgung durch eine schadstofffreie Vernichtung z.B. durch Verbrennen oder für eine Wiederaufbereitung des Herstellungsmaterials optimal restentleert und leicht gereinigt werden können.

Die Entwicklung von rekonditionierbaren Mehrwegfässern aus Stahlblech führte zu dem aus der DE 196 41 172 A1 bekannten gattungsgemäßen Rekonditionierverfahren, mit dem Spundfässer nach dem ersten Transport bzw. der ersten Lagerung von umweltgefährdendem Flüssiggut einer hohen Gefahrenklasse nach der Entnahme des gefährlichen Flüssiggutes für eine weitere Verwendung als Transport- und Lagerfässer für granulat- und pulverförmige sowie pasteuse Stoffe einer niedrigen Gefahrenklasse mit verhältnismäßig geringem Aufwand zu Deckelfässern umgerüstet werden können, die sowohl das Einbringen als auch das Entnehmen des Füllgutes erleichtern und die die Möglichkeit einer direkten Einwirkung auf den Behälterinhalt z.B. mit einem einfachen Rührwerk bieten im Gegensatz zu Spundfässern mit einem Oberboden, der an den Faßmantel angefalzt ist, so daß das Füllgut nur mit einem durch den Füll- und Entleerspund in das Faß eingesetzten, aufwendigen Rührwerk, das z.B. als Faltpropeller ausgebildet ist, umgerührt werden kann.

Die nach dem Verfahren gemäß der DE 196 41 172 A1 aus Spundfässern rekonditionierten Deckelfässer können nicht zum Transport und zur Lagerung von Flüssigkeiten verwendet werden, da der Verschlußdeckel den Dichtigkeitsanforderungen unter äußerer Krafteinwirkung insbesondere beim Fallwurf nicht genügt. Ferner besteht beim Abtrennen des Oberbodens von dem Spundfaßkörper durch einen in Höhe bzw. durch den Bereich des Mittelpunktes des gerollten Öffnungsrandes des Faßmantels senkrecht zur Faßlängsachse geführten Trennschnitt die Gefahr, daß der gerollte Faßrand beschädigt wird.

Der Erfindung liegt die Aufgabe zugrunde, ein preisgünstiges Verfahren zum Rekonditionieren von Spundfässern aus Metallblech zu Deckelfässern zu entwickeln, die zum Transport und zur Lagerung von Flüssigkeiten sowie pulver- und granulatförmigen und pasteusen Stoffen eingesetzt werden können.

Diese Aufgabe ist erfindungsgemäß gelöst durch das Rekonditionierverfahren mit den Merkmalen des Patentanspruchs.

Durch den bei dem erfindungsgemäßen Rekonditionierverfahren konzentrisch zur Faßlängsachse durch den Übergangsbereich zwischen Bodenscheibe und Innenrand des Oberbodens geführten Kreisschnitt kann der Oberboden eines Spundfasses aus Metallblech ohne eine Beschädigung des nach außen gerollten oberen Randes des Faßmantels von diesem getrennt werden. Durch das Ausformen des unteren, nach dem Abtrennen der Bodenscheibe des Oberbodens freiliegenden Abschnitts des Innenrandes des Oberbodens in eine ringförmig umlaufende Innensicke des Faßhalses wird dieser derart versteift, daß der Faßdeckel den Dichtigkeitsanforderungen beim Fallwurf genügt, so daß das rekonditionierte Deckfaß für Flüssigkeiten verwendbar ist, und es wird eine Verletzungsgefahr durch die scharfe Schnittkante des Innenrandes des Oberbodens ausgeschlossen.

Die Erfindung ist nachstehend anhand von Zeichnungsfiguren erläutert, die im einzelnen folgendes zeigen:
- Fig. 1: einen Längsschnitt eines als Spundfaß ausgebildeten Mehrwegfasses und jeweils in vergrößerter, ausschnittsweiser Darstellung
- Fig. 2: dem Oberboden des Spundfasses, die
- Fig. 3a und 3b: das Abtrennen des Oberbodens vom Faßmantel des Spundfasses mittels einer Schneidrolle,
- Fig. 4: das Werkzeug zum Profilieren der Innensicke des Faßhalses des rekonditionierten Deckelfasses und
- Fig. 5: den Deckelbereich des zu einem Deckelfaß rekonditionierten Spundfasses.

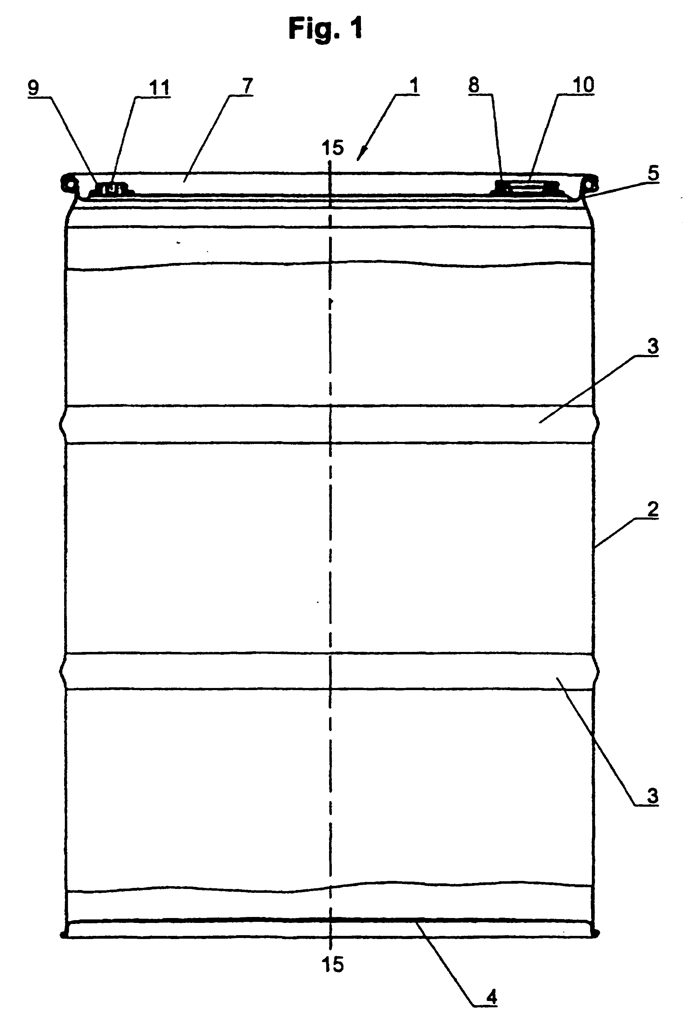

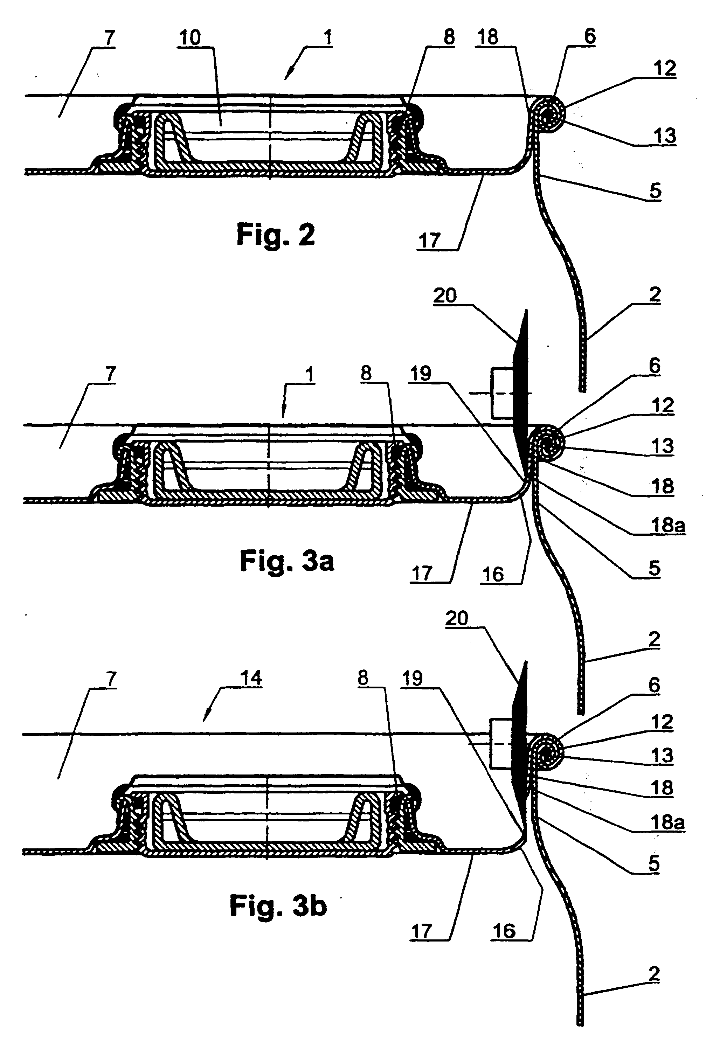

Das in den Fign. 1 und 2 dargestellte Spundfaß 1 aus Stahlblech besitzt einen zylindrischen Faßmantel 2 mit Roll- und Versteifungssicken 3, der unten durch einen aufgefalzten Unterboden 4 dicht verschlossen ist. Der den Faßhals 5 bildende obere Abschnitt des Faßmantels 2 ist zum Öffnungsrand 6 des Faßmantels 2 eingezogen, der als ein nach außen gerollter Rollrand ausgebildet ist.

Der Oberboden 7 des Spundfasses 1 weist einen Füll- und Entleerspund 8 sowie einen Be- und Entlüftungsspund 9 auf, die durch als Schraubstopfen ausgebildete Spundstopfen 10, 11 verschließbar sind. Der Oberboden 7 liegt mit seinem gerollten Außenrand 12 auf dem Öffnungsrand 6 des Faßmantels 2 auf und ist mit diesem zusammengefalzt und dicht verschweißt. Der Oberboden 7 ist zusätzlich durch ein zwischen den beiden Rändern 6, 12 befindliches Dichtungsmaterial 13 gegen den Faßmantel 2 abgedichtet.

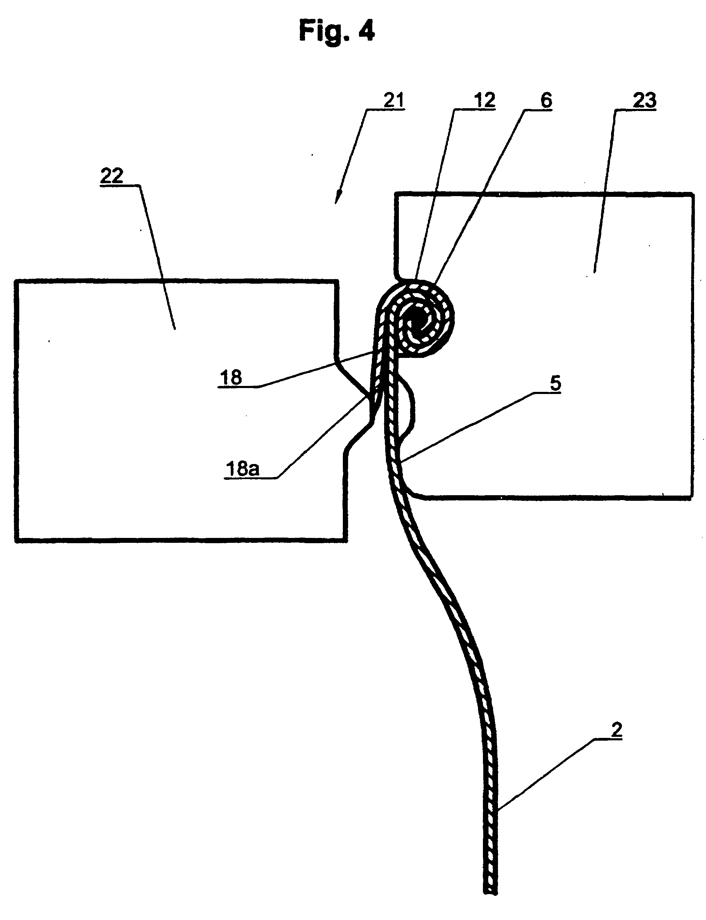

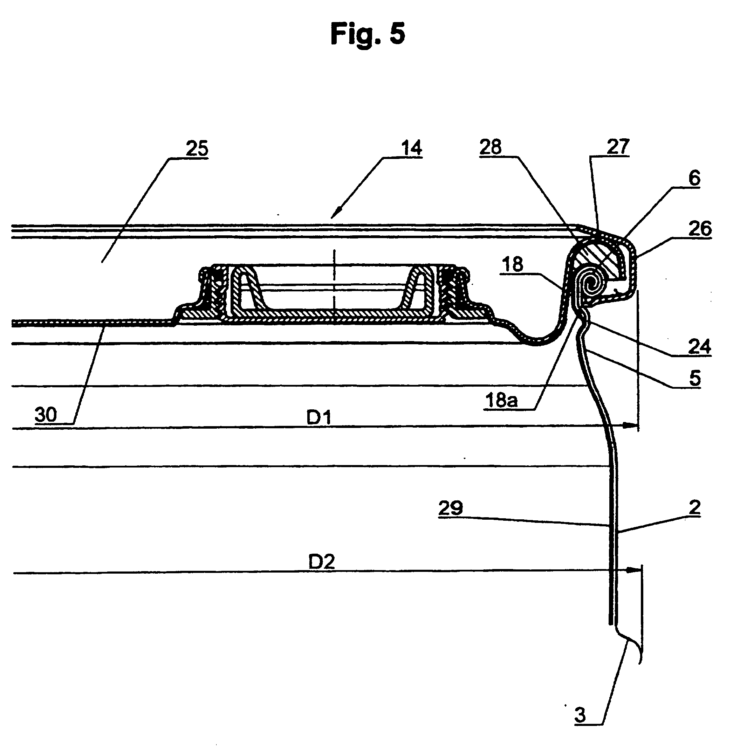

Beim Rekonditionieren des Spundfasses 1 nach den Fign. 1 und 2 zu einem Deckfaß 14 nach Fig. 5 wird entsprechend den Darstellungen in den Fign. 3a und 3b durch einen konzentrisch zur Faßlängsachse 15 - 15 durch den Übergangsbereich 16 zwischen Bodenscheibe 17 und Innenrand 18 des Oberbodens 7 geführten Kreisschnitt 19 mittels einer Schneidrolle 20 die Bodenscheibe 17 des Oberbodens 7 vom Faßmantel 2 abgetrennt, und anschließend wird der untere Abschnitt 18a des Innenrandes 18 des Oberbodens 7 mit einem Profilierwerkzeug 21 gemäß Fig. 4, das zwei Profilierrollen 22, 23 aufweist, in eine ringförmig umlaufende Innensicke 24 des Faßhalses 5 ausgeformt.

Das Deckelfaß 14 gemäß Fig. 5 wird mit einem Spunddeckel 25 oder einem einfachen Deckel verschlossen, der mittels eines Spannringes 26 unter Zwischenschaltung einer in den Deckelrand 27 eingebrachten Dichtung 28 auf dem Öffnungsrand 6 des Faßhalses 5 gesichert wird.

Das Deckelfaß 14 kann mit einer auch als Inliner bezeichneten, austauschbaren Innenhülle 29 aus einer Kunststoffolie ausgestattet sein, die über den Öffnungsrand 6 des Faßmantels 2 gezogen und zwischen diesem und der Deckeldichtung 28 eingeklemmt wird.

Ferner kann der Spunddeckel 25 des Deckelfasses 14 mit einer Innenauskleidung 30 aus einer Kunststoffolie oder einer Metall-Kunststoff-Verbundfolie versehen sein.

Zur Unterbringung von Spundfässern 1 und Deckelfässern 14 in einem ISO-Container ist vorzugsweise bei der am meisten verbreiteten Faßausführung mit einem Volumen von 213 Litern nach DIN 6643 der Faßhals 5 gegen den Öffnungsrand 6 des Faßmantels 2 derart eingezogen, daß der Außendurchmesser D1 am Spannring 26 einschließlich dessen Hebelverschluß gleich dem oder kleiner als der Durchmesser D2 der Roll- und Versteifungssicken 3 des Faßmantels 2 von 585 Millimetern ist.

## Patentansprüche

1. Verfahren zum Rekonditionieren von Mehrwegfässern aus Metallblech, die für den anfänglichen Gebrauch als Spundfässer (1) ausgebildet sind, die einen mit dem Faßmantel (2) fest verbundenen Oberboden (7) mit einem Füll- und Entleerspund (8) aufweisen und die für den weiteren Gebrauch durch Abtrennen des Oberbodens (7) zu Deckelfässern (14) mit Spunddeckel (25) oder einfachem Deckel mit Spannringverschluß (26) zur Befestigung des Deckels (25) auf dem nach außen gerollten Öffnungsrand (6) des Faßmantels (2) umrüstbar sind, wobei der den Faßhals (5) bildende obere Abschnitt des Faßmantels (2) zum Öffnungsrand (6) des Faßmantels (2) eingezogen ist oder sich zu diesem verjüngt und bei der Ausbildung als Spundfässer (1) der Oberboden (7) mit seinem gerollten Außenrand (12) auf dem Öffnungsrand (6) des Faßmantels (2) aufliegt und mit diesem zusammengefalzt und verschweißt ist, **gekennzeichnet durch** einen konzentrisch zur Faßlängsachse (15 - 15) **durch** den Übergangsbereich (16) zwischen Bodenscheibe (17) und Innenrand (18) des Oberbodens (7) geführten Kreisschnitt (19) zum Abtrennen der Bodenscheibe (17) des Oberbodens (7) vom Faßmantel (2) und das Ausformen des unteren Abschnitts (18a) des Innenrandes (18) des Oberbodens (7) in eine ringförmig umlaufende Innensicke (24) des Faßhalses (5).

## Claims

1. Method of reconditioning reusable barrels made of sheet metal, which are configured for initial use as bunghole barrels (1) which have an upper base (7), which is securely connected to the barrel casing (2) and has a filling and emptying bunghole (8), and which barrels can be re-equipped for further use, by separation of the upper base (7), as lid covered barrels (14) with a bunghole cover (25) or with a simple cover with a clamping ring (26) for securing the cover (25) on the externally rolled-up opening edge (6) of the barrel casing (2), the upper portion of the barrel casing (2), which forms the barrel neck (5), being contracted towards the opening edge (6) of the barrel casing (2) or tapering towards the latter and, during configuration as bunghole barrels (1), the upper base (7) with its rolled-up outer edge (12) being supported upon the opening edge (6) of the barrel casing (2) and being folded together with and welded to said opening edge, **characterised by** a circular section (19), which runs concentrically to the barrel longitudinal axis (15 - 15) through the transition region (16) between the base disc (17) and the inner edge (18) of the upper base (7), for separation of the base disc (17) of the upper base (7) from the barrel casing (2), and by moulding of the lower portion (18) of the inner edge (18a) of the upper base (7) into an annular circumferential inner bead (24) of the barrel neck (5).

## Revendications

1. Procédé de reconditionnement de fûts réutilisables en tôle métallique, qui sont constitués pour être utilisés à l'origine en tant que fûts à bondon, qui ont un plateau (7) supérieur assemblé rigidement à la surface (2) latérale du fût et ayant un bondon de remplissage et de vidange et qui peuvent être transformés en vue d'être utilisés ultérieurement par séparation du plateau (7) supérieur, en des fûts (14) à couvercle ayant un couvercle à bondon ou un couvercle simple ayant une fermeture (26) à anneau de serrage pour fixer le couvercle (25) sur le bord (6) d'ouverture enroulé vers l'extérieur de la surface latérale du fût, la partie supérieure de la surface (2) latérale du fût, qui forme le goulot (5) du fût, étant rentrée vers le bord (6) de l'ouverture de la surface(2) latérale du fût ou se rétrécissant vers celui-ci et lors de la constitution en fût (1) à bondon, le plateau (7) supérieur s'appuie par son bord (12) extérieur enroulé sur le bord (6) de l'ouverture de la surface (2) latérale du fût et y est serti et soudé, **caractérisé par** une coupe (19) circulaire concentriquement à l'axe (15-15) longitudinal du fût passant dans la partie (16) de transition entre le disque (17) de fond et le bord (18) intérieur du plateau (7) supérieur pour séparer le disque (17) de fond du plateau (7) supérieur de la surface (2) latérale du fût et par la déformation de la partie (18a) inférieure du bord (18) intérieur du plateau (7) supérieur en une moulure (24) intérieure faisant le tour annulairement du goulot (5) du fût.
